# EUROPEAN PATENT SPECIFICATION

(11) **EP 3 356 607 B1**
(45) Date of publication and mention of the grant of the patent: **18.01.2023**
(21) Application number: 16794440.4
(22) Date of filing: 29.09.2016
(51) Int. Cl.: E02D 5/10, E02D 5/24, E02D 5/52, E21B 17/042, F16L 15/00, F16L 15/06

(54) **PILE**
PFAHL
PIEU

(30) Priority: 30.09.2015 NL 2015529
(43) Date of publication of application: 08.08.2018
(73) Proprietor: De Waal, Victor Jan, 1017 LE Amsterdam (NL)
(72) Inventor: De Waal, Victor Jan, 1017 LE Amsterdam (NL)
(74) Representative: EP&C
(86) International application number: PCT/NL2016/050668
(87) International publication number: WO 2017/058014

(56) References cited:
- WO-A1-2012/056500
- WO-A1-2015/114218
- GB-A- 2 033 518
- US-A1- 2012 286 507

## Description

The invention relates to a combination of a thin-walled first pipe section and a thin-walled second pipe section configured to be connected to each other to form a pipe. Such pipe may for example be used as a foundation pile for supporting a building structure such as a house. The invention further relates to a pipe constructed from a combination of a first and second pipe section, a method to construct a pipe, and a pipe section.

In a known embodiment of a foundation pile, a connection between a first pipe section and a second pipe section is formed by a conical screw thread connection. In this conical screw thread connection a first end of the first pipe section comprises an inner screw thread arranged at a conical inner surface provided at the first end of the first pipe section, and the second pipe section comprises an outer screw thread arranged at a conical outer surface provided at a second end of the second pipe section.

By screwing the outer screw thread into the inner screw thread the first pipe section and the second pipe section are connected to each other. Usually, the pipe is constructed by multiple pipe sections, wherein each pipe section comprises an inner screw thread at the first end and an outer screw thread at the second end.

Usually, the first end of the first pipe section and the second end of the second pipe section each comprise a stop surface. The first stop surface and the second stop surface are arranged such that the inner screw thread and the outer screw thread are completely screwed into each other when the first stop surface abuts the second stop surface.

The first and second pipe sections normally have at least over the middle part a constant outer diameter and a constant inner diameter, and the conical inner and outer surfaces extend between this inner diameter and the outer diameter.

An example of a known combination is known from US-A-2012/0286507, which discloses a threaded connection used in exploration and operation of hydrocarbon wells. The combination includes threaded zones with male and female threads that comprise a root, a crest, a stabbing flank and a load flank. A groove is provided in the load flank of the treaded zone, wherein a boss including a convex and concave surfaces is housed. In a connected state, a radial clearance is present between the concave surface and the groove and an axial clearance is present between the end of the boss and the bottom of the groove.

WO-A-2011-056500 discloses another combination for an oil well pipe. The combination is equipped with a male screw having a seal formed as a convex surface and a female screw having a tapered seal. The contact portions of the seals are pressed together to prevent leakage of the pipe.

A drawback of the known combinations of pipe sections is that the screw thread connection introduces a relatively weak location in the pipe constructed from the first and second pipe sections.

It is an aim of the invention to provide an improved combination of pipe sections that provides increased strength to the pipe constructed from the pipe sections.

The invention provides a combination of a thin-walled first pipe section and a thin-walled second pipe section according to claim 1.

According to the invention, the screw thread connection is designed with substantial negative play. Due to this negative play, screwing the outer screw thread into the inner screw thread to the desired depth will result in an increased wall thickness of the screw thread connection compared with a middle part of the first and second pipe section. The increased wall thickness of a combination according to the invention is at least 5% with respect to the wall thickness of a middle part of the first and second pipe section.

It has been found that an increase of wall thickness of at least 5% substantially improves the strength of the screw thread connection and therewith the pipe constructed with the first and second pipe sections.

Screwing of the outer screw thread into the inner screw thread until the desired depth has been reached will, due to the negative play, lead to stresses above the yield point of the material and, as a result, in plastic deformation of the inner screw thread, the outer screw thread and the inner surface and/or the outer surface. Since the first and second pipe sections are thin-walled, the deformation may be absorbed in the first and/or second end of the first and second pipe section, respectively. It is remarked that the deformation of the screw threads also results in a better engaging of the screw threads into each other which also increases the strength of the screw thread connection.

Due to the deformation of the inner screw thread and the outer screw thread of the screw thread connection is that a permanent connection may be obtained between the inner screw thread and the outer screw thread. This has the advantage that a drilling pipe can be rotated clockwise and anti-clockwise once the outer screw thread has been screwed into the inner screw thread. The combination of the invention is typically suitable for single use.

The increase in wall thickness may occur over a substantial part of the length of the first and second parts, for example at least half of the length of the first part.

A further advantage of the combination according to the invention is that, since the strength of the screw thread connections may be increased by the increased wall thickness of the screw thread connection, pipe sections with a smaller wall thickness can be used to obtain a pipe with a corresponding strength when compared with conventional screw thread connections.

This results in a decrease in the volume of steel to be used which represents a decrease in costs, weight etc.

The first pipe section and second pipe section can be made of steel, preferably high strength steel. The first pipe section and second pipe section are preferably fabricated by forming steel plate into a tube like form and welding the longitudinal or spiral shaped seams to form a pipe section having a constant outer diameter and inner diameter over its entire length. Subsequently, the inner surface and inner screw thread and the outer surface and the outer screw thread can be machined into the respective pipe section.

In an embodiment, the outer surface at the outer end of the outer screw thread has a smaller diameter than the inner surface at the outer end of the inner screw thread. The outer end of the outer screw thread is the end of the screw thread closest to an end of the pipe section; similarly, the outer end of the inner screw thread is the end of the screw thread closest to an end of the pipe section.

The inner screw tread and the outer screw thread have a negative play with respect to each other. By making the diameter of the outer surface at the outer end of the outer screw thread smaller than the diameter of the inner surface at the outer end of the inner screw thread, the beginning of the outer screw thread can be screwed more easily in the beginning of the inner screw thread.

In an embodiment, screwing the inner screw thread and the outer screw thread in each other results in an increased wall thickness at the screw thread connection of at least 10 %, preferably 15% - 50%, with respect to the wall thickness of a middle part of the first pipe section and a middle part of the second pipe section.

In an embodiment, the inner surface is a conical inner surface and the outer surface is a conical outer surface. By providing a conical inner surface and a conical outer surface provided with an inner screw thread and an outer screw thread, respectively, the increase in wall thickness over the length of the screw thread connection can be made substantially constant.

In alternative embodiments, one of the inner surface and the outer surface may be conical while the other is mainly cylindrical.

In an embodiment, the inner screw thread and the outer screw thread have a screw thread height extending from the conical inner surface and conical outer surface, respectively, wherein the inner screw thread runs from a first inner diameter of the conical inner surface to a second inner diameter of the conical inner surface, wherein the first inner diameter is larger than the second inner diameter, wherein the outer screw thread runs from a first outer diameter of the conical outer surface to a second outer diameter of the conical outer surface, wherein the first outer diameter is larger than the second outer diameter, and wherein a difference between the first inner diameter and the first outer diameter or a difference between the second inner diameter and the second outer diameter is smaller than the screw thread height.

In an embodiment, the middle part of the first tube section has an inner diameter and an outer diameter, wherein the conical inner surface of the inner screw thread has a minimum diameter larger than or equal to the inner diameter and a maximum diameter smaller than or equal to the outer diameter, and wherein the conical outer surface of the outer screw thread has a minimum diameter larger than or equal to the inner diameter and a maximum diameter smaller than or equal to the outer diameter. In other words the conical inner surface extends between the inner diameter and the outer diameter of the middle part of the first pipe section and In other words the conical outer surface extends between the inner diameter and the outer diameter of the middle part of the second pipe section.

In an embodiment, a wall thickness of the first pipe section and the second pipe section is maximally 10% of the diameter of the first pipe section and the second pipe section, respectively. The first and second pipe sections are thin walled pipe sections to allow plastic deformation of the conical inner and/or outer surfaces while the outer screw thread is screwed into the inner screw thread.

The outer diameter of the first and second pipe section may for example be in the range of 50 mm - 150 mm, while the wall thickness of the pipe sections is 4 mm - 15 mm. The thin wall of the pipe sections is advantageous in order to allow the first end and/or the second end to plastically deform when the outer screw thread is screwed into the inner screw thread.

In an embodiment, screwing the inner screw thread and the outer screw thread in each other comprises screwing until a stop surface at a first end of the first pipe section abuts an associated stop surface on the second end of the second pipe section.

By using stop surfaces arranged at the first end of the first pipe section and the second end of the pipe, the user can easily determine whether the outer screw thread has been screwed into the inner screw thread to the desired depth. The stop surfaces may for example be arranged at the inner side of the screw thread connection or the outer side of the screw thread connection or both.

Other indicators to indicate the desired screwing depth may also be used such as indicator lines. In another embodiment, the number of revolutions or a minimal number of revolutions of the outer screw thread with respect to the inner screw thread may be prescribed to the user, in order to assure that the outer screw thread has been screwed into the inner screw thread to the desired depth.

In an embodiment, the combination comprises a sealing ring to be arranged between the first end of the first pipe section and the second end of the second pipe section. A sealing ring may be provided between the first end and the second end to seal the transition between the first pipe section and the second pipe section. This sealing ring may in particular prevent that moisture reaches the inner and/or outer screw thread. The sealing ring may for example be provided near the outer surface of the first and second pipe sections to prevent moisture to enter the screw thread connection from the outer surface of the pipe sections. As an alternative, or in addition, a sealing ring may be provided near the inner surface of the first and second pipe sections to prevent moisture to enter the screw thread connection from the inner surface of the pipe sections.

The first pipe section and/or the second pipe section, in particular the first end and/or the second end, respectively, may comprise a circumferential groove to at least partially receive the sealing ring.

According to the invention, the screw thread connection is intended to be plastically deformed during screwing the inner screw thread and the outer screw thread in each other results to obtain the increased wall thickness at the screw thread connection of at least 5 % with respect to the wall thickness in a middle part of the first pipe section and the second pipe section.

In an embodiment, the combination comprises multiple pipe sections, wherein each pipe section comprises a first end and a second end opposed to the first end, wherein each pipe section comprises an inner screw thread arranged at an inner surface provided at the first end of the pipe section, and an outer screw thread arranged at an outer surface provided at the second end of the pipe section, wherein the multiple pipe sections can be connected to each other using the inner and outer screw threads to form a pipe.

In an embodiment, the inner screw thread and the outer screw thread are double or triple screw threads. The screw thread connection according to the invention requires a relatively large torque in order to screw the outer screw thread into the inner screw thread. To prevent that the required forces on the threads become too high, it may be advantageous to use double or triple screw threads as inner and outer screw threads. Since the pitch of the double or triple screw threads may be larger compared to a single screw thread, the forces on the threads may be lower.

The invention further provides a pipe constructed by screwing the first pipe section and the second pipe section of any of the preceding claims to each other.

In an embodiment, the pipe may be a foundation pile. Such foundation pile may be rammed, vibrated, drilled and/or pushed into the ground to create a foundation pile to support an object, such as a building. The foundation pile may be filled, before, during and/or after being arranged in the ground, with a suitable filling material, such as cement grout, grout, concrete, and/or mortar.

The presence of such filling material will increase the strength of the screw thread connection since the filling material will provide radial support at the inner side of the screw thread connection. This radial support may prevent that the outer surface 7 is pressed inwards into the foundation pile 1.

The invention also provides a method to provide a pipe using a combination as claimed in any of the claims 1-12, comprising the step of connecting the first pipe section and the second pipe section, wherein the step of connecting comprises screwing the inner screw thread and the outer screw thread in each other, wherein screwing involves introducing stresses into the screw thread connection above the yield point of the material of the first pipe section and the second pipe section.

The method of the invention may require a relatively large torque during the screwing of the outer screw thread into the inner screw thread to obtain the desired plastic deformation in the screw thread connection. For example, a torque used for screwing the outer screw thread into the inner screw thread may be at least 20% of a torque required to reach a yielding point in the middle part of the first pipe section and/or second pipe section.

Screw driving machines used for rotating, e.g. drilling drill pipes or foundation piles into the ground are often capable of delivering such torque for pipe sections used for these applications. Therefore, the method according to the invention may be carried out using a screw driving machine for drilling pipes into the ground for foundation purposes.

Embodiments of the invention will now be described, by way of example only, with reference to the accompanying schematic drawings in which:
Figure 1 shows a longitudinal cross section of a pipe section according to a first embodiment of the invention;
Figure 2 shows a longitudinal cross section of the screw thread connection between two pipe sections as shown in Figure 1;
Figure 3 shows a longitudinal cross section of an alternative embodiment of a screw thread connection between two pipe sections;
Figure 4 shows the first end of an embodiment of a pipe section in more detail;
Figure 5 shows the second end of the pipe section of Figure 4 in more detail;
Figure 6 shows a longitudinal cross section of a pipe section according to a second embodiment of the invention; and
Figure 7 shows a longitudinal cross section of the screw thread connection between two pipe sections as shown in Figure 6.

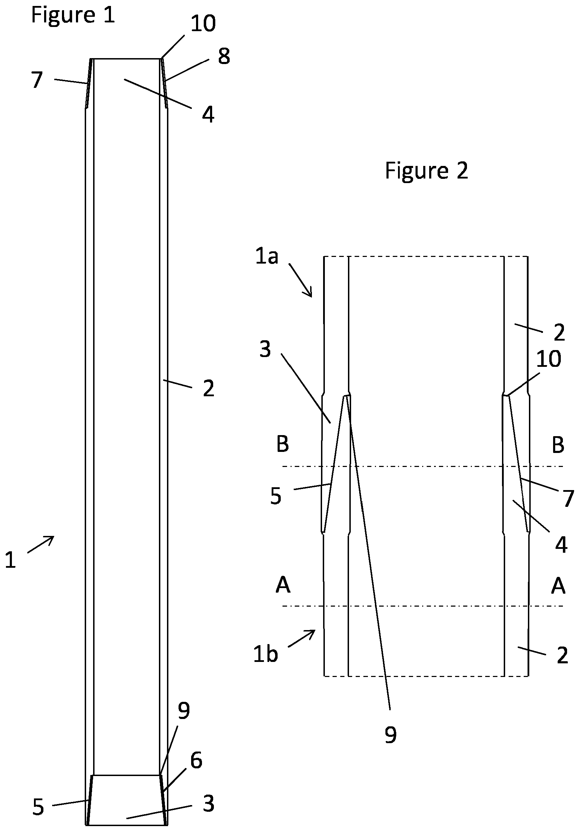

Figure 1 shows a longitudinal cross section of an embodiment of a pipe section, generally denoted by reference numeral 1. The pipe section 1 comprises a middle part 2, a first end 3 and a second end 4.

The pipe section 1 is thin-walled, in particular the wall thickness of the pipe section 1 is maximally 10% of the diameter of the pipe section 1. The outer diameter of the pipe section 1 s at least 50 mm.

The first end 3 comprises a conical inner surface 5 having an inner screw thread 6 and the second end 4 comprises a conical outer surface 7 having an outer screw thread 8. The first end 3 further comprises a stop surface 9 and the second end 4 comprises a stop surface 10.

The pipe section 1 is fabricated by welding a steel plate in a pipe-shaped form. The welded pipe section has a constant inner diameter and a constant outer diameter over its entire length.

Thereafter, the conical inner surface 5 and the conical outer surface 7, including the inner screw thread 6 and the outer screw thread 8 are machined into the pipe section, resulting in the pipe section 1 shown in Figure 1. The outer diameter of the pipe section 1 is constant over the middle part 2 and the first end 3, while the inner diameter of the pipe section 1 is constant over the middle part and the second end 4.

The pipe section 1 is intended to be used in combination with other pipe sections to construct a pipe, for example a pipe used as a drilling pipe or foundation pile. Such foundation pile may be rammed, vibrated, drilled and/or pushed into the ground to create a foundation pile to support an object, such as a building. A drilling pipe is intended to be drilled into the ground.

After the foundation pile is formed in the ground connecting multiple pipe sections 1 on top of each other, the foundation pile may be filled with a filling material such as cement grout, grout, concrete or mortar. The presence of such filling material may increase the strength of the foundation pile.

The pipe section 1 and other pipe sections may be substantially identical. Typically, the other pipe sections will have the same inner and outer diameter, and the same of different lengths. In each of these pipe sections, the first end comprises a conical inner surface having an inner screw thread and the second end comprises a conical outer surface having an outer screw thread, substantially identical to the pipe section 1 shown in Figure 1.

It is remarked that hereinafter the reference numerals used with respect to the pipe section 1 of Figure 1 will also be used for corresponding parts of other pipe sections.

A pipe can be constructed using the pipe sections 1 by screwing the outer screw thread 8 of one pipe section 1 into the inner screw thread 6 of the other pipe section 1. During connection of two pipe sections 1, the outer screw thread 8 is completely screwed into the inner screw thread 6 until the stop surface 9 of the first end 3 abuts the stop surface 10 of the second end 4.

Instead of stop surfaces 9 and 10 to indicate that the inner screw thread 6 and the outer screw thread 8 are screwed into each other to the desired depth also other indicators such as indicator stripes can be used. Also a certain number of revolutions may be prescribed in order to assure that the outer screw thread 8 is screwed to the desired depth into the inner screw thread 6.

A known screw driving machine used in drilling pipes into the ground for foundation purposes may be used to screw the outer screw thread 8 into the inner screw thread.

In the pipe section of Figure 1, the inner screw thread 6 and the outer screw thread 8 have a screw thread height extending from the conical inner surface 6 and conical outer surface 8, respectively. The inner screw thread 6 runs from a first inner diameter of the conical inner surface 5 to a second inner diameter of the conical inner surface 5, wherein the first inner diameter is larger than the second inner diameter. Similarly, the outer screw thread 8 runs from a first outer diameter of the conical outer surface 7 to a second outer diameter of the conical outer surface 7, wherein the first outer diameter is larger than the second outer diameter.

The difference between the first inner diameter and the first outer diameter and the difference between the second inner diameter and the second outer diameter is smaller than the screw thread height.

As a result, the inner screw thread 6 and the outer screw thread 8 have negative play with respect to each other. Screwing of the outer screw thread 8 into the inner screw thread 6 until the stop surfaces 9 and 10 abut against each other, can only be accomplished by introducing stresses that exceed the yield point of the material of the pipe sections 1. This results in plastic deformation of the first end 3 and/or the second end 4 of the respective pipe sections of the conical screw thread connection.

A longitudinal cross section of the screw thread connection obtained by screwing the outer screw thread 8 of a second pipe section 1b into the inner screw thread 6 of a first pipe section 1b until the stop surfaces 9 and 10 abut against each other is shown in Figure 2. It can be seen that the wall thickness of the screw thread connection, for example at cross section B-B is increased with respect to the wall thickness of the middle part 2 of the pipe section, i.e. cross section A-A, due to the negative play of the inner screw thread 6 an the outer screw thread 8 and the associated increase in material.

This increase in wall thickness of the screw thread connection is at least 5% with respect to the wall thickness of the middle part 2 of the pipe section. Preferably, the increase in wall thickness is at least 10% with respect to the wall thickness of the middle part 2 of the pipe sections 1.

The increase in wall thickness at the location of the conical screw thread connection improves the strength of screw thread connection and therewith the overall strength of the pipe constructed with the pipe sections 1.

Figure 2 shows only one screw thread connection of a first pipe section 1a to a second pipe section 1b. Further pipe sections 1 may be connected to combination to increase the length of the pipe. Each of the

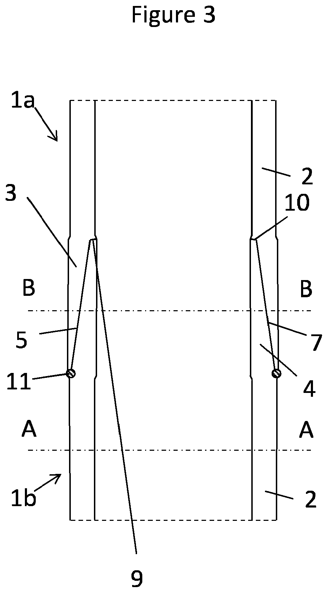

Figure 3 shows an alternative embodiment of a first pipe section 1a and a second pipe section 1b. In this embodiment, a sealing ring 11 is provided between the first end 3 and the second end 4 to seal the transition between the first pipe section 1a and the second pipe section 1b at the outer surface of the pipe. This sealing ring 11 protects the screw thread connection from environmental influences from the outside such as moisture in order to prevent corrosion of the screw thread connection.

Correspondingly, a sealing ring may be provided at the transition between the first pipe section 1a and the second pipe section 1b at the inner surface of the pipe.

The first end 3 and/or the second end 4 may be provided with a circumferential groove to at least partially receive the sealing ring 11.

It is remarked that instead of providing a sealing ring, the part of the inner surface 5 closest to the end of the pipe section 1 and the part of the outer surface 7 abutting against this part after screwing the inner and outer screw thread in to each other may be flat surfaces, i.e. without inner and outer screw thread, to form a sealing engagement at the outer side of the screw thread connection. Similarly, a sealing engagement can be created by two flat surfaces at the inner end of the screw thread connection.

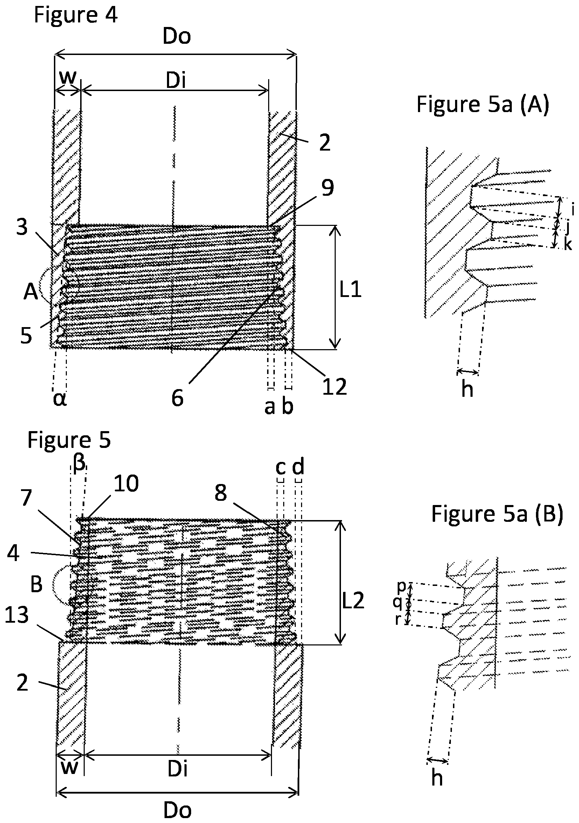

Figures 4 and 5 show an embodiment of a pipe section 1 as depicted in Figure 1 in more detail. Figure 4 shows the first end 3 of the pipe section 1, while Figure 5 shows the second end 4 of the pipe section 1 in more detail.

Figures 4 and 5 show a pipe section having a middle part 2 with an outer diameter Do of about 88.9 mm and an inner diameter Di of about 76.3 mm. The wall thickness w of the middle part 2 is therewith about 6.3 mm which is about 7 % of the outer diameter Do.

At the first end 3, an inner screw thread 6 is provided on the conical inner surface 5. The conical inner surface 5 with the inner screw thread 6 is machined in the pipe section 1. The length L1 of the first end is about 50 mm and the angle α of the conical inner surface 5 with respect to the longitudinal axis of the pipe section 1 is about 1.95 degrees.

The first end comprises two surfaces extending in a plane perpendicular to the longitudinal axis of the pipe section 1, i.e. the stop surface 9 and a second stop surface 12. The width a of the stop surface 9 is about 0.6 mm and width b of the second stop surface 12 is about 2.5 mm.

Detail A of Figure 4 is depicted in Figure 4a and shows the inner screw thread 6 in more detail. The inner screw thread 6 has a screw thread height h of about 1.5 mm.

The inner screw thread 6 comprises a root, a flank and a crest. The root of the inner screw thread 5 has a dimension i of about 1.9 mm, the flank has a dimension j of about 0.75 mm and the crest has a dimension k of about 1.6 mm.

At the second end 4, as shown in Figure 5, an outer screw thread 8 is provided on the conical outer surface 7. The conical outer surface 7 with outer screw thread 8 is machined in the pipe section 1. The length L2 of the second end 4 is, corresponding to the length L1 of the first end 3, about 50 mm. The angle β of the conical outer surface 7 with respect to the longitudinal axis of the pipe section 1 is about 1.72 degrees, and therefore differs from the angle α of the conical inner surface 5 at the first end 3.

The second end 4 comprises two surfaces extending in a plane perpendicular to the longitudinal axis of the pipe section 1, i.e. the stop surface 10 and a second stop surface 13. The width c of the stop surface 10 is about 1.5 mm and width d of the second stop surface 13 is about 1.8 mm.

When the inner screw thread 6 and the outer screw thread 8 are completely screwed into each other, the stop surface 9 will abut against the stop surface 10 and the stop surface 12 will abut against the stop surface 13. In alternative embodiments, the dimensions of the stop surfaces may be different or there may be only one stop surface on each of the first end 3 and the second end 4. It is also possible that no stop surfaces are provided.

Detail B of Figure 5 is depicted in Figure 5a and shows the outer screw thread 8 in more detail. The outer screw thread 8 has a screw thread height h of about 1.5 mm.

The outer screw thread 8 comprises a root, a flank and a crest corresponding to the root, flank and crest of the inner screw thread 6. The root of the outer screw thread 8 has a dimension p of about 1.9 mm, the flank has a dimension q of about 0.75 mm and the crest has a dimension of about 1.6 mm.

The pitch of the inner screw thread 6 and the outer screw thread 8 is about 5 mm.

It is remarked that Figures 4 and 5 only show an example of a combination of an inner screw thread 6 and an outer screw thread 8 that have negative play with respect to each other. The dimensions of the conical inner surface 5 and the conical outer surface 7 and the inner screw thread 6 and the outer screw thread 8 provided thereon may differ as long as the inner screw thread 6 and the associated outer screw thread 8 have negative play with respect to each other, and the pipe section is a thin walled pipe section that allows plastic deformation of the first end 3 and the second end 4 when the outer screw thread 8 is screwed into the inner screw thread 6.

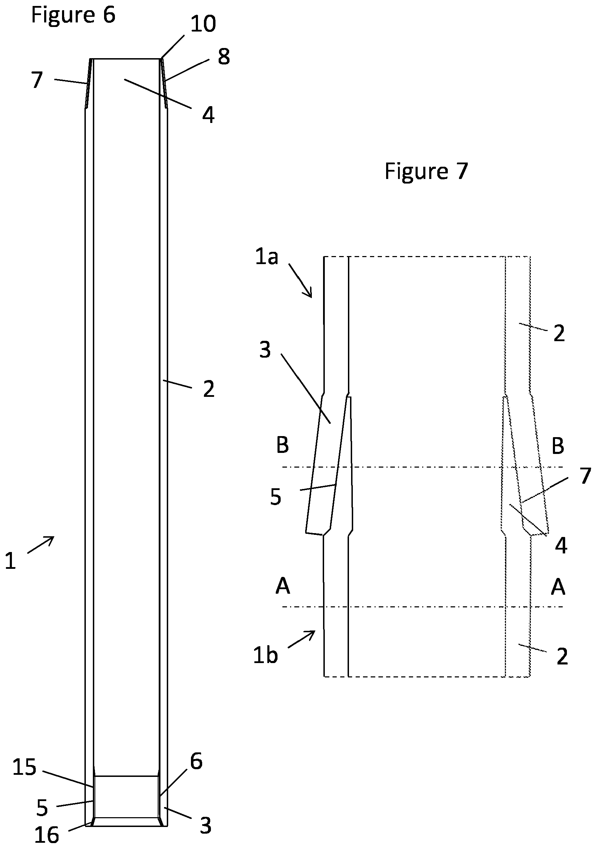

Figure 6 shows a second embodiment of a pipe section 1 according to the invention. The pipe section comprises a middle part 2, a first end 3 and a second end 4. The second end 4 corresponds to the second end of the pipe section 1 of Figure 1, having a conical outer surface 7 with an outer screw thread 8. The first end 3 comprises an inner surface having a cylindrical main part 15 and a conical end part 16 at the outer end of the second end 3. The inner screw thread 6 runs over the cylindrical main part 15 and the conical end part 16.

The conical end part 16 is provided to allow at least the outer end of the outer surface 7 to be arranged in the interior space of the pipe section 1 at the outer end of the first end 3, such that the beginning of the outer screw thread 8 can be engaged with the beginning of the inner screw thread 6.

By screwing the inner screw thread 6 further into the outer screw thread, plastic deformation of the first end 3 and the second end 4 will occur. The resulting screw thread connection is shown in Figure 7. I can be seen that at the upper side of the screw thread connection the wall thickness has increased with a relatively low amount, i.e. the material of the stop surface 10, while at the other lower end of the screw thread connection, eth wall thickness has been increased with at least 50% of the wall thickness of the middle part 2 of the pipe sections. This increase in wall thickness substantially increases the strength of the screw thread connection. In practice, an increase in wall thickness of almost 100 % can be created.

It is remarked that although the embodiment of Figure 6 shows an inner surface 5 with a cylindrical main part 15 and the conical end part 16, also other inner surfaces may be used, such as for example two or more adjacent conical inner surfaces with different angles, or other combinations of adjacent inner surfaces.

## Claims

1. A combination of a thin-walled first pipe section (1) and a thin-walled second pipe section (1) configured to be connected to each other to form a pipe using a screw thread connection, each thin-walled pipe section (1) comprising a middle part (2), a first end (3) and a second end (4), wherein the screw thread connection is formed by:
an inner screw thread (6) arranged at an inner surface (5) provided at a first end (3) of the first pipe section (1a), and
an outer screw thread (8) arranged at an outer surface (7) provided at a second end (4) of the second pipe section (1b),
**characterized in that** the inner screw thread (6) and the outer screw thread (8) are designed to have a negative play with respect to each other, such that screwing the inner screw thread (6) and the outer screw thread (8) in each other leads to stresses above the yield point of the material, and, as a result, in plastic deformation of the inner screw thread, the outer screw thread and the inner surface (5) and the outer surface (7), wherein the deformation is absorbed in the first end (3) of the first pipe section and the second end (4) of the second pipe section,
wherein the screw thread connection is intended to be plastically deformed during screwing the inner screw thread (6) and the outer screw thread (8) in each other to obtain an increased wall thickness at the screw thread connection of at least 5 % with respect to the wall thickness in a middle part (2) of the first pipe section (1) and the second pipe section (1).

2. The combination of claim 1, wherein the outer surface (7) at the outer end of the outer screw thread (8) has a smaller diameter than the inner surface (5) at the outer end of the inner screw thread.

3. The combination of claim 1 or 2, wherein screwing the inner screw thread (6) and the outer screw thread (8) in each other results in an increased wall thickness at the screw thread connection of at least 10 % with respect to the wall thickness of a middle part of the first pipe section and a middle part of the second pipe section.

4. The combination of any of the claims 1-3, wherein the inner surface is a conical inner surface and the outer surface is a conical outer surface (7).

5. The combination of claim 4, wherein the inner screw thread (6) and the outer screw thread (8) have a screw thread height extending from the conical inner surface and conical outer surface, respectively,
wherein the inner screw thread runs from a first inner diameter of the conical inner surface to a second inner diameter of the conical inner surface, wherein the first inner diameter is larger than the second inner diameter,
wherein the outer screw thread runs from a first outer diameter of the conical outer surface to a second outer diameter of the conical outer surface, wherein the first outer diameter is larger than the second outer diameter,
wherein a difference between the first inner diameter and the first outer diameter or a difference between the second inner diameter and the second outer diameter is smaller than the screw thread height.

6. The combination of any of the claims 4-5,
wherein the middle part of the first pipe section (1) has an inner diameter and an outer diameter,
wherein the conical inner surface of the inner screw thread has a minimum diameter larger than or equal to the inner diameter and a maximum diameter smaller than or equal to the outer diameter, and wherein the conical outer surface of the outer screw thread has a minimum diameter larger than or equal to the inner diameter and a maximum diameter smaller than or equal to the outer diameter.

7. The combination of any of the preceding claims, wherein the outer and inner diameters of the first and second pipe sections (1) are at least constant and the same over the middle part (2) of the first and second pipe sections, wherein the outer diameter of the first end of the first pipe section (1a) is the same as the outer diameter of the middle part of the first pipe section, and wherein the inner diameter of the second end of the second pipe section (1b) is the same as the inner diameter of the middle part of the second pipe section.

8. The combination of any of the preceding claims, wherein a wall thickness of the first pipe section (1a) and the second pipe section (1b) is maximally 10% of the diameter of the first pipe section and the second pipe section, respectively.

9. The combination of any of the preceding claims wherein screwing the inner screw thread (6) and the outer screw thread (8) in each other comprises screwing until a stop surface (9, 12) at a first end of the first pipe section abuts an associated stop surface (10, 13) on the second end of the second pipe section.

10. The combination of any of the preceding claims, wherein the combination comprises a sealing ring (11) to be arranged between the first end of the first pipe section (1) and the second end of the second pipe section (1).

11. The combination of any of the preceding claims,
wherein the pipe is a foundation pile or drilling pipe.

12. The combination of any of the preceding claims,
wherein the inner screw thread (6) and the outer screw thread (8) are double or triple screw threads.

13. A pipe constructed by screwing the first pipe section (1) and the second pipe section (1) of any of the preceding claims to each other.

14. A method to provide a pipe using a combination as claimed in any of the claims 1-12, comprising the step of connecting the first pipe section (1) and the second pipe section (1), wherein the step of connecting comprises screwing the inner screw thread (6) and the outer screw thread (8) in each other, wherein screwing involves introducing stresses into the screw thread connection above the yield point of the material of the first pipe section and the second pipe section.

15. The method of claim 14,
wherein a torque used for screwing the outer screw thread (8) into the inner screw thread (6) is at least 20% of a torque required to reach a yielding point in the middle part (2) of the first pipe section and/or second pipe section.

## Patentansprüche

1. Kombination aus einem dünnwandigen ersten Rohrabschnitt (1) und einem dünnwandigen zweiten Rohrabschnitt (1), die ausgestaltet sind, um miteinander verbunden zu werden, um ein Rohr unter Verwendung einer Schraubgewindeverbindung zu bilden, wobei jeder dünnwandige Rohrabschnitt (1) ein Mittelteil (2), ein erstes Ende (3) und ein zweites Ende (4) umfasst, wobei die Schraubgewindeverbindung gebildet wird durch:
ein inneres Schraubgewinde (6), das an einer inneren Fläche (5) angeordnet ist, die an einem ersten Ende (3) des ersten Rohrabschnitts (1a) vorgesehen ist, und
ein äußeres Schraubgewinde (8), das an einer äußeren Fläche (7) angeordnet ist, die an einem zweiten Ende (4) des zweiten Rohrabschnitts (1b) vorgesehen ist,
**dadurch gekennzeichnet, dass** das innere Schraubgewinde (6) und das äußere Schraubgewinde (8) ausgebildet sind, um ein negatives Spiel zueinander aufzuweisen, so dass ein Verschrauben des inneren Schraubgewindes (6) und des äußeren Schraubgewindes (8) ineinander zu Spannungen oberhalb der Streckgrenze des Materials führt, und infolgedessen zu einer plastischen Verformung des inneren Schraubgewindes, des äußeren Schraubgewindes und der inneren Fläche (5) und der äußeren Fläche (7) führt, wobei die Verformung in dem ersten Ende (3) des ersten Rohrabschnitts und dem zweiten Ende (4) des zweiten Rohrabschnitts aufgenommen wird,
wobei die Schraubgewindeverbindung dazu bestimmt ist, während des Verschraubens des inneren Schraubgewindes (6) und des äußeren Schraubgewindes (8) ineinander plastisch verformt zu werden, um eine erhöhte Wandstärke an der Schraubgewindeverbindung von mindestens 5 % in Bezug auf die Wandstärke in einem Mittelteil (2) des ersten Rohrabschnitts (1) und des zweiten Rohrabschnitts (1) zu erhalten.

2. Kombination nach Anspruch 1, wobei die äußere Fläche (7) an dem äußeren Ende des äußeren Schraubgewindes (8) einen kleineren Durchmesser aufweist als die innere Fläche (5) an dem äußeren Ende des inneren Schraubgewindes.

3. Kombination nach Anspruch 1 oder 2, wobei das Verschrauben des inneren Schraubgewindes (6) und des äußeren Schraubgewindes (8) ineinander zu einer erhöhten Wanddicke an der Schraubgewindeverbindung von mindestens 10 % in Bezug auf die Wanddicke eines Mittelteils des ersten Rohrabschnitts und eines Mittelteils des zweiten Rohrabschnitts führt.

4. Kombination nach einem der Ansprüche 1-3, wobei die innere Fläche eine konische innere Fläche und die äußere Fläche eine konische äußere Fläche (7) ist.

5. Kombination nach Anspruch 4, wobei das innere Schraubgewinde (6) und das äußere Schraubgewinde (8) eine Schraubgewindehöhe aufweisen, die sich von der konischen inneren Fläche bzw. der konischen äußeren Fläche erstreckt,
wobei das innere Schraubgewinde von einem ersten Innendurchmesser der konischen inneren Fläche zu einem zweiten Innendurchmesser der konischen inneren Fläche verläuft, wobei der erste Innendurchmesser größer als der zweite Innendurchmesser ist,
wobei das äußere Schraubgewinde von einem ersten Außendurchmesser der konischen Außenfläche zu einem zweiten Außendurchmesser der konischen Außenfläche verläuft, wobei der erste Außendurchmesser größer als der zweite Außendurchmesser ist,
wobei eine Differenz zwischen dem ersten Innendurchmesser und dem ersten Außendurchmesser oder eine Differenz zwischen dem zweiten Innendurchmesser und dem zweiten Außendurchmesser kleiner als die Schraubgewindehöhe ist.

6. Kombination nach einem der Ansprüche 4-5,
wobei der Mittelteil des ersten Rohrabschnitts (1) einen Innendurchmesser und einen Außendurchmesser aufweist,
wobei die konische innere Fläche des inneren Schraubgewindes einen minimalen Durchmesser größer oder gleich dem Innendurchmesser und einen maximalen Durchmesser kleiner oder gleich dem Außendurchmesser aufweist, und wobei die konische äußere Fläche des äußeren Schraubgewindes einen minimalen Durchmesser größer oder gleich dem Innendurchmesser und einen maximalen Durchmesser kleiner oder gleich dem Außendurchmesser aufweist.

7. Kombination nach einem der vorhergehenden Ansprüche, wobei die Außen- und Innendurchmesser des ersten und zweiten Rohrabschnitts (1) mindestens konstant und über den Mittelteil (2) des ersten und zweiten Rohrabschnitts gleich sind, wobei der Außendurchmesser des ersten Endes des ersten Rohrabschnitts (1a) der gleiche ist wie der Außendurchmesser des Mittelteils des ersten Rohrabschnitts, und wobei der Innendurchmesser des zweiten Endes des zweiten Rohrabschnitts (1b) der gleiche ist wie der Innendurchmesser des Mittelteils des zweiten Rohrabschnitts.

8. Kombination nach einem der vorhergehenden Ansprüche, wobei die Wanddicke des ersten Rohrabschnitts (1a) und des zweiten Rohrabschnitts (1b) maximal 10% des Durchmessers des ersten bzw. des zweiten Rohrabschnitts beträgt.

9. Kombination nach einem der vorhergehenden Ansprüche, wobei das Verschrauben des inneren Schraubgewindes (6) und des äußeren Schraubgewindes (8) ineinander ein Verschrauben umfasst, bis eine Anschlagfläche (9, 12) an einem ersten Ende des ersten Rohrabschnitts an einer zugeordneten Anschlagfläche (10, 13) an dem zweiten Ende des zweiten Rohrabschnitts anliegt.

10. Kombination nach einem der vorhergehenden Ansprüche, wobei die Kombination einen Dichtungsring (11) umfasst, der zwischen dem ersten Ende des ersten Rohrabschnitts (1) und dem zweiten Ende des zweiten Rohrabschnitts (1) anzuordnen ist.

11. Kombination nach einem der vorhergehenden Ansprüche, wobei das Rohr ein Gründungspfahl oder ein Bohrrohr ist.

12. Kombination nach einem der vorhergehenden Ansprüche, wobei das innere Schraubgewinde (6) und das äußere Schraubgewinde (8) ein doppeltes oder dreifaches Schraubgewinde sind.

13. Rohr, das durch miteinander Verschrauben des ersten Rohrabschnitts (1) und des zweiten Rohrabschnitts (1) nach einem der vorhergehenden Ansprüche hergestellt wird.

14. Verfahren, um ein Rohr unter Verwendung einer Kombination nach einem der Ansprüche 1 bis 12 bereitzustellen, umfassend den Schritt eines Verbindens des ersten Rohrabschnitts (1) und des zweiten Rohrabschnitts (1),
wobei der Schritt des Verbindens ein Verschrauben des inneren Schraubgewindes (6) und des äußeren Schraubgewindes (8) ineinander umfasst, wobei das Verschrauben ein Einbringen von Spannungen in die Schraubgewindeverbindung oberhalb der Streckgrenze des Materials des ersten Rohrabschnitts und des zweiten Rohrabschnitts mit sich bringt.

15. Verfahren nach Anspruch 14,
wobei ein Drehmoment, das zum Verschrauben des äußeren Schraubgewindes (8) in das innere Schraubgewinde (6) verwendet wird, mindestens 20% eines Drehmoments beträgt, das erforderlich ist, um eine Streckgrenze in dem Mittelteil (2) des ersten Rohrabschnitts und/oder zweiten Rohrabschnitts zu erreichen.

## Revendications

1. Combinaison d'une première section de tuyau à paroi mince (1) et d'une seconde section de tuyau à paroi mince (1) configurées pour être raccordées l'une à l'autre pour former un tuyau à l'aide d'un raccordement de type filetage, chaque section de tuyau à paroi mince (1) comprenant une partie centrale (2), une première extrémité (3) et une seconde extrémité (4), dans laquelle le raccordement de type filetage est formé par :
un filetage interne (6) agencé au niveau d'une surface interne (5) prévue à une première extrémité (3) de la première section de tuyau (1a), et
un filetage externe (8) agencé au niveau d'une surface externe (7) prévue à une seconde extrémité (4) de la seconde section de tuyau (1b),
**caractérisée en ce que** le filetage interne (6) et le filetage externe (8) sont conçus pour présenter un jeu négatif l'un par rapport à l'autre, de telle sorte que le vissage du filetage interne (6) et du filetage externe (8) l'un dans l'autre provoque des contraintes au-dessus de la limite d'élasticité apparente du matériau, et, de ce fait, une déformation plastique du filetage interne, du filetage externe et de la surface interne (5) et de la surface externe (7), dans laquelle la déformation est absorbée dans la première extrémité (3) de la première section de tuyau et la seconde extrémité (4) de la seconde section de tuyau,
dans laquelle le raccordement de type filetage est censé être déformé plastiquement pendant le vissage du filetage interne (6) et du filetage externe (8) l'un dans l'autre pour obtenir une épaisseur de paroi augmentée au niveau du raccordement de type filetage d'au moins 5 % par rapport à l'épaisseur de paroi dans une partie centrale (2) de la première section de tuyau (1) et de la seconde section de tuyau (1).

2. Combinaison selon la revendication 1, dans laquelle la surface externe (7) au niveau de l'extrémité externe du filetage externe (8) présente un diamètre inférieur à la surface interne (5) au niveau de l'extrémité externe du filetage interne.

3. Combinaison selon la revendication 1 ou 2, dans laquelle le vissage du filetage interne (6) et du filetage externe (8) l'un dans l'autre a pour résultat une épaisseur de paroi augmentée au niveau du raccordement de type filetage d'au moins 10 % par rapport à l'épaisseur de paroi d'une partie centrale de la première section de tuyau et d'une partie centrale de la seconde section de tuyau.

4. Combinaison selon l'une quelconque des revendications 1 à 3, dans laquelle la surface interne est une surface interne conique et la surface externe est une surface externe conique (7).

5. Combinaison selon la revendication 4, dans laquelle le filetage interne (6) et le filetage externe (8) présentent une hauteur de filetage s'étendant à partir de la surface interne conique et de la surface externe conique, respectivement,
dans laquelle le filetage interne s'étend d'un premier diamètre interne de la surface interne conique à un second diamètre interne de la surface interne conique, dans laquelle le premier diamètre interne est supérieur au second diamètre interne,
dans laquelle le filetage externe s'étend d'un premier diamètre externe de la surface externe conique à un second diamètre externe de la surface externe conique, dans laquelle le premier diamètre externe est supérieur au second diamètre externe,
dans laquelle une différence entre le premier diamètre interne et le premier diamètre externe ou une différence entre le second diamètre interne et le second diamètre externe est inférieure à la hauteur du filetage.

6. Combinaison selon l'une quelconque des revendications 4 à 5,
dans laquelle la partie centrale de la première section de tuyau (1) présente un diamètre interne et un diamètre externe,
dans laquelle la surface interne conique du filetage interne présente un diamètre minimal supérieur ou égal au diamètre interne et un diamètre maximal inférieur ou égal au diamètre externe, et dans laquelle la surface externe conique du filetage externe présente un diamètre minimal supérieur ou égal au diamètre interne et un diamètre maximal inférieur ou égal au diamètre externe.

7. Combinaison selon l'une quelconque des revendications précédentes, dans laquelle les diamètres externe et interne des première et seconde sections de tuyau (1) sont au moins constants et identiques sur la partie centrale (2) des première et seconde sections de tuyau, dans laquelle le diamètre externe de la première extrémité de la première section de tuyau (1a) est identique au diamètre externe de la partie centrale de la première section de tuyau, et dans laquelle le diamètre interne de la seconde extrémité de la seconde section de tuyau (1b) est identique au diamètre interne de la partie centrale de la seconde section de tuyau.

8. Combinaison selon l'une quelconque des revendications précédentes, dans laquelle une épaisseur de paroi de la première section de tuyau (1a) et de la seconde section de tuyau (1b) représente au maximum 10 % du diamètre de la première section de tuyau et de la seconde section de tuyau, respectivement.

9. Combinaison selon l'une quelconque des revendications précédentes, dans laquelle le vissage du filetage interne (6) et du filetage externe (8) l'un dans l'autre consiste à visser jusqu'à ce qu'une surface de butée (9, 12) au niveau d'une première extrémité de la première section de tuyau vienne en butée contre une surface de butée associée (10, 13) sur la seconde extrémité de la seconde section de tuyau.

10. Combinaison selon l'une quelconque des revendications précédentes, dans laquelle la combinaison comprend un anneau d'étanchéité (11) devant être agencé entre la première extrémité de la première section de tuyau (1) et la seconde extrémité de la seconde section de tuyau (1).

11. Combinaison selon l'une quelconque des revendications précédentes, dans laquelle le tuyau est un pieu de fondation ou un tube de forage.

12. Combinaison selon l'une quelconque des revendications précédentes,
dans laquelle le filetage interne (6) et le filetage externe (8) sont des filetages doubles ou triples.

13. Tuyau construit par vissage de la première section de tuyau (1) et de la seconde section de tuyau (1) selon l'une quelconque des revendications précédentes l'une à l'autre.

14. Procédé de fourniture d'un tuyau en utilisant une combinaison selon l'une quelconque des revendications 1 à 12, comprenant l'étape de raccordement de la première section de tuyau (1) et de la seconde section de tuyau (1), dans lequel l'étape de raccordement comprend le vissage du filetage interne (6) et du filetage externe (8) l'un dans l'autre, dans lequel le vissage implique l'introduction de contraintes dans le raccordement de type filetage au-dessus de la limite d'élasticité apparente du matériau de la première section de tuyau et de la seconde section de tuyau.

15. Procédé selon la revendication 14,
dans lequel un couple utilisé pour le vissage du filetage externe (8) dans le filetage interne (6) représente au moins 20 % d'un couple requis pour atteindre une limite d'élasticité apparente dans la partie centrale (2) de la première section de tuyau et/ou de la seconde section de tuyau.
